# EUROPÄISCHE PATENTSCHRIFT

(11) **EP 2 384 612 B1**
(45) Veröffentlichungstag und Bekanntmachung des Hinweises auf die Patenterteilung: **06.08.2014**
(21) Anmeldenummer: 11161860.9
(22) Anmeldetag: 11.04.2011
(51) Int. Cl.: A01D 41/14, A01D 41/16

(54) **Antriebsanordnung für einen Erntevorsatz einer Erntemaschine**
Drive assembly for a harvesting attachment of a harvesting machine
Agencement d'entraînement pour un accessoire de récolte d'une moissonneuse

(30) Priorität: 05.05.2010 DE 102010028605
(43) Veröffentlichungstag der Anmeldung: 09.11.2011
(73) Patentinhaber: DEERE & COMPANY, Moline, Illinois 61265-8098 (US)
(72) Erfinder: Dold, Matthew George, 66399, Mandelbachtal (DE); Groß, Stefan, 66292, Riegelsberg (DE)
(74) Vertreter: Holst, Sönke

(56) Entgegenhaltungen:
- EP-A1- 1 440 617
- EP-A1- 1 932 411
- DE-A1-102004 058 116
- US-A- 4 253 295

## Beschreibung

Die Erfindung betrifft eine Antriebsanordnung für einen Erntevorsatz einer Erntemaschine, die ein Fahrgestell umfasst, an dem ein Einzugsgehäuse befestigt ist, an dessen Frontseite eine gegenüber dem Einzugsgehäuse bewegliche Befestigungseinrichtung angebracht ist, an der ein Erntevorsatz abnehmbar befestigbar ist, wobei die Befestigungseinrichtung an einem Zwischenrahmen angebracht ist, der gegenüber dem Einzugsgehäuse um eine sich in Vorwärtsrichtung erstreckende Achse beweglich ist, das Antriebssystem eine von der Erntemaschine her in Drehung versetzbare, mit der Befestigungseinrichtung derart gekoppelte Erntevorsatzabtriebswelle umfasst, dass die Erntevorsatzabtriebswelle sich mit der Befestigungseinrichtung gegenüber dem Einzugsgehäuse bewegen kann, und eine Erntevorsatzantriebswelle des Erntevorsatzes antriebsmäßig mit der Erntevorsatzabtriebswelle verbindbar ist.

### Stand der Technik

Landwirtschaftliche Erntemaschinen setzen sich üblicherweise aus der eigentlichen Erntemaschine, die in der Regel selbstfahrend ausgeführt ist, und einem Erntevorsatz zusammen, der an der Vorderseite der Erntemaschine an einem Einzugsgehäuse abnehmbar befestigt ist. Bei einem Transport auf einer Straße wird der Erntevorsatz entweder vom Einzugsgehäuse abgenommen oder in eine Transportstellung mit reduzierter Breite verbracht.

Um den Bodenkonturen besser folgen zu können, sind manche Erntevorsätze um eine horizontale, sich in Vorwärtsrichtung erstreckende Achse schwenkbar am Einzugsgehäuse befestigt. Dies gilt insbesondere für Hangmähdrescher, deren Räder gegenüber dem Fahrgestell beweglich sind, um das Fahrgestell stets horizontal auszurichten (vgl. die als gattungsbildend angesehene EP 1 440 617 A1). Es wurde auch vorgeschlagen, den Erntevorsatz gegenüber dem Einzugsgehäuse um eine horizontale, sich in Vorwärtsrichtung erstreckende Achse verstellbar zu gestalten (DE 199 49 213 A1 und DE 199 16 645 A1) oder den Erntevorsatz gegenüber dem Einzugsgehäuse um die Hochachse zu verstellen (DE 10 2006 002 053 A1 und DE 10 2005 027 586 A1).

Der Antrieb der angetriebenen Elemente des Erntevorsatzes erfolgt üblicherweise über Gelenkwellen, die sich entweder quer zur Vorwärtsrichtung zwischen einer mit der unteren Schrägfördererwalze gekoppelten Erntevorsatzabtriebswelle der Erntemaschine und einem oder beiden seitlichen Enden des Erntevorsatzes, d. h. im Wesentlichen quer zur Fahrtrichtung (DE 199 18 550 A), oder in der Vorwärtsrichtung erstrecken. Bei pendelnd gelagerten Erntevorsätzen finden teleskopierbare Gelenkwellen Verwendung. Soll der Erntevorsatz von der Erntemaschine abgenommen werden, ist zunächst die Gelenkwelle abzunehmen, was relativ zeitaufwändig ist, da der Fahrer dazu von seinem Arbeitsplatz heruntersteigen muss.

Es sind zwar automatische Kupplungssysteme bekannt, die die Antriebsverbindung zwischen der Erntemaschine und dem Erntevorsatz selbsttätig herstellen, indem zwei Kupplungselemente relativ zueinander bewegt werden (DE 2 111 227 A1, EP 1884 151 A1, EP 1 985 168A1, DE 4 412 115 A1), jedoch beruhen diese Kupplungssysteme darauf, dass der Erntevorsatz starr am Einzugsgehäuse befestigt ist. Sie eignen sich demnach nicht für gegenüber dem Einzugsgehäuse bewegliche Erntevorsätze.

Die EP 1 932 411 A1 beschreibt eine positionsverstellbare Dreipunktschnittstelle für einen Traktor, die auch eine antreibbare Kupplungshälfte trägt, die beim Anbau eines Arbeitsgeräts selbsttätig mit einer Kupplungshälfte zum Antrieb von beweglichen Elementen des Arbeitsgeräts kuppelt.

### Aufgabe

Das der Erfindung zu Grunde liegende Problem wird darin gesehen, eine verbesserte Antriebsanordnung für einen Erntevorsatz an einer Erntemaschine bereitzustellen, bei dem die oben erwähnten Nachteile nicht oder nur in einem verminderten Maß vorliegen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine umfasst ein Fahrgestell, an dem ein Einzugsgehäuse befestigt ist, an dessen Frontseite eine gegenüber dem Einzugsgehäuse bewegliche Befestigungseinrichtung angebracht ist. An der Befestigungseinrichtung kann ein Rahmen eines Erntevorsatzes lösbar angebracht werden. Das Antriebssystem umfasst eine von einem Antrieb der Erntemaschine her in Drehung versetzbare, mit der Befestigungseinrichtung gekoppelte und sich mit der Befestigungseinrichtung gegenüber dem Einzugsgehäuse bewegende Erntevorsatzabtriebswelle, mit der eine Erntevorsatzantriebswelle des Erntevorsatzes durch eine Kupplung mit zwei Kupplungshälften antriebsmäßig verbindbar ist. Eine Kupplungshälfte ist der Erntemaschine zugeordnet und mit der Erntevorsatzabtriebswelle antriebsverbunden. Die andere Kupplungshälfte ist dem Erntevorsatz zugeordnet und dient zum Antrieb der Erntevorsatzantriebswelle des Erntevorsatzes. Die beispielsweise als Klauenkupplungen oder innen bzw. außen verzahnte, ineinander eingreifende Wellen ausgeführten Kupplungshälften trennen sich bei einer Demontage des Erntevorsatzes selbsttätig und verbinden sich bei der Anbringung des Erntevorsatzes am Einzugsgehäuse selbsttätig miteinander.

Die Befestigungseinrichtung ist an einem Zwischenrahmen angebracht, der gegenüber dem Einzugsgehäuse um eine sich in Vorwärtsrichtung erstreckende Achse beweglich ist, während die Befestigungseinrichtung gegenüber dem Zwischenrahmen in Vorwärtsrichtung verstellbar ist. Die erntemaschinenseitige Kupplungshälfte ist mit der Befestigungseinrichtung gekoppelt.

Auf diese Weise erreicht man, dass ein gegenüber dem Einzugsgehäuse beweglicher Erntevorsatz abgenommen und wieder angebracht werden kann, ohne dass der Fahrer eine Antriebsverbindung zwischen der Erntemaschine und dem Erntevorsatz anbringen oder trennen müsste.

Bei einer bevorzugten Ausführungsform umfasst die Befestigungseinrichtung zwei beidseits oberhalb einer Einzugsöffnung des Einzugsgehäuses angeordnete, sich horizontal und quer zur Vorwärtsrichtung erstreckende Stifte. Die Stifte sind bezüglich der Vorwärtsrichtung in unterschiedlichen Positionen an dem am Einzugsgehäuse abgestützten Zwischenrahmen fixierbar. Der Erntevorsatz ist mit Haken ausgestattet, die von oben her in eine jeweils einen Stift von oben her umgreifende Position verbringbar sind. Der Erntevorsatz ist demnach durch die Schwerkraft an der Befestigungseinrichtung fixiert und kann von ihr getrennt werden, indem er auf eine Ablage gestellt lot wird und das Einzugsgehäuse nach unten abgesenkt und schließlich nach hinten abgezogen wird. Die Anbringung erfolgt in umgekehrter Reihenfolge. Es können auch weitere Maßnahmen zur Arretierung des Erntevorsatzes am Einzugsgehäuse vorgesehen sein, wie im unteren Bereich des Einzugsgehäuses angeordnete Haken, die entsprechende Elemente des Erntevorsatzes unter- oder übergreifen. Die unterschiedlichen, auswählbaren Positionen der Stifte ermöglicht es, den Erntevorsatz gegenüber dem Einzugsgehäuse in unterschiedlichen Winkeln gegenüber der Horizontalen anzubringen. Dadurch kann der Erntevorsatz bei unterschiedlichen Arbeitshöhen horizontal gehalten werden. Es sind aber auch beliebige andere Anordnungen möglich. So können die Befestigungsanordnung und die Erntevorsatzabtriebswelle mit der erntemaschinenseitigen Kupplungshälfte starr am Zwischenrahmen befestigt werden und der Zwischenrahmen gegenüber dem Einzugsgehäuse pendelnd gelagert und in Vorwärtsrichtung in unterschiedlichen Positionen befestigbar sein.

Einer der Stifte kann über eine um eine horizontal und quer zur Vorwärtsrichtung schwenkbar angelenkte Strebe mit der erntemaschinenseitigen Kupplungshälfte derart verbunden sein, dass die Kupplungshälfte mit dem Stift verstellt wird, wenn er in eine andere Position verbracht wird.

Die Schwenkachse der Strebe und die erntemaschinenseitige Kupplungshälfte befinden sich vorzugsweise seitlich neben dem unteren Ende des Einzugsgehäuses.

Die Stifte können wahlweise in einer von mehreren Öffnungen in U-förmigen, mit dem Zwischenrahmen verbundenen Aufnahmen und eine Öffnung der Strebe einsteckbar sein.

Der Zwischenrahmen kann durch eine Rollenlagerung gegenüber dem Einzugsgehäuse um eine virtuelle, sich in Vorwärtsrichtung erstreckende Achse drehbar gelagert sein, obwohl auch eine Drehlagerung um eine reale Achse möglich wäre, die sich vorzugsweise mittig an der Oberseite des Einzugsgehäuses befindet.

Die Erntevorsatzabtriebswelle ist vorzugsweise eine sich in Vorwärtsrichtung erstreckende Gelenkwelle, die mit einem erntemaschinenseitigen Antrieb verbunden ist, bei dem es sich um ein mechanisches Getriebe handeln kann, das mechanisch mit dem Verbrennungsmotor der Erntemaschine verbunden ist, oder um einen Hydromotor, der von einer mechanisch vom Verbrennungsmotor der Erntemaschine angetriebenen Hydraulikpumpe mit unter Druck stehendem Hydraulikfluid versorgt wird. Die Erntevorsatzantriebswelle wird hingegen zweckmäßigerweise über ein Winkelgetriebe mit einer Querwelle zum Antrieb von antreibbaren Elementen des Erntevorsatzes antriebsverbunden.

Die Erntevorsatzantriebswelle und die Erntevorsatzabtriebswelle erstrecken sich bei einer bevorzugten Ausführungsform der Erfindung in Vorwärtsrichtung. Dadurch wird ein Trennen und Verbinden der beiden Kupplungshälften ohne zusätzliche Aktoren ermöglicht, denn die Relativbewegung zwischen Erntevorsatz und Erntemaschine erfolgt beim Anbringen und Abnehmen des Erntevorsatzes in genau diese Richtung. Um bei größeren zu übertragenden Drehmomenten eine Überlastung und Trennung der Kupplungshälften zu verhindern, bietet es sich jedoch an, die Kupplungshälften im gekoppelten Zustand durch Federkraft und/oder einen Aktor gegeneinander vorzuspannen.
Die Erfindung kann an beliebigen Erntemaschinen Verwendung finden, wie Feldhäckslern, Baumwollpflückern oder Mähdreschern.

### Ausführungsbeispiel

In den Zeichnungen ist ein nachfolgend näher beschriebenes Ausführungsbeispiel der Erfindung dargestellt. Es zeigt:
- Fig. 1: eine schematische, teilgeschnittene Seitenansicht einer Erntemaschine mit einem zur Veranschaulichung abgenommenen Erntevorsatz und Zwischenrahmen,
- Fig. 2: eine perspektivische, schematische Ansicht des Zwischenrahmens aus Figur 1 mit einer in der rückwärtigen Position befindlichen Befestigungseinrichtung, und
- Fig. 3: die Ansicht aus Figur 2 bei einer in ihrer vorderen Position befindlichen Befestigungseinrichtung.

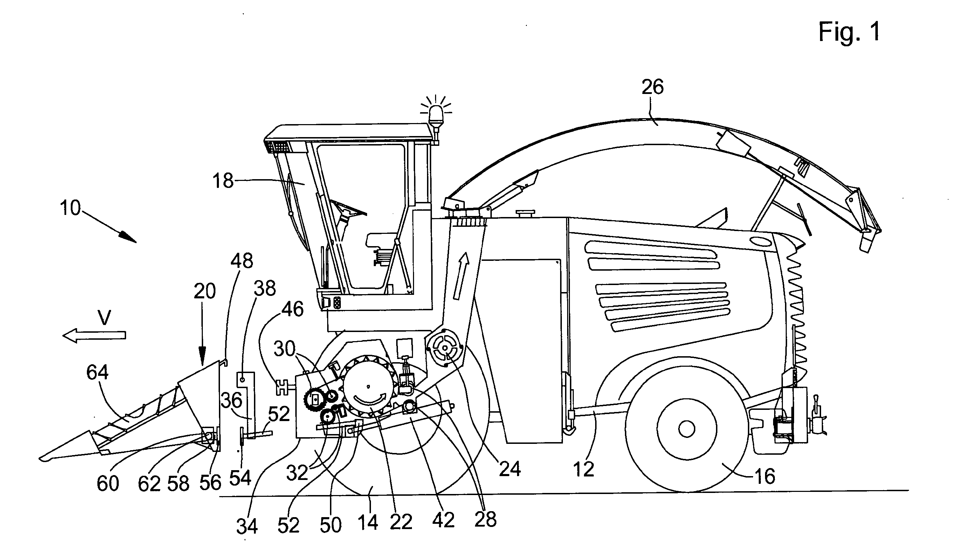

In der Figur 1 ist eine Erntemaschine 10 in Form eines Feldhäckslers in schematischer Seitenansicht dargestellt. Die Erntemaschine 10 baut sich auf einem Fahrgestell 12 auf, das von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Mähvorsatzes für die Maisernte einsehbar ist. Mittels des Erntevorsatzes 20 vom Boden aufgenommenes Erntegut, z. B. Gras oder dergleichen wird im Erntebetrieb über einen Einzugsförderer mit oberen Vorpresswalzen 30 und unteren Vorpresswalzen 32, die innerhalb eines Einzugsgehäuses 34 an der Frontseite der Erntemaschine 10 angeordnet sind, einer unterhalb der Fahrerkabine 18 angeordneten Häckseleinrichtung 22 in Form einer Häckseltrommel zugeführt, die es in kleine Stücke häckselt und es einer Fördervorrichtung 24 aufgibt. Das Gut verlässt die Arbeitsmaschine 10 zu einem nebenher fahrenden Transportfahrzeug über einen Auswurfschacht und einen um eine etwa vertikale Achse drehbaren und in der Neigung verstellbaren Auswurfkrümmer 26. Zwischen der Häckseleinrichtung 22 und der Fördervorrichtung 24 ist eine Nachbearbeitungseinrichtung mit zwei zusammenwirkenden Walzen 28 angeordnet, durch die das geförderte Gut der Fördervorrichtung 24 tangential zugeführt wird. Im Folgenden beziehen sich Richtungsangaben, wie seitlich, unten und oben, auf die Vorwärtsrichtung V der Erntemaschine 10, die in der Figur 1 nach links verläuft.

Das Einzugsgehäuse 34 ist mittels eines Aktors 42 um die sich horizontal und quer zur Vorwärtsrichtung V erstreckende Drehachse der Häckseleinrichtung 24 verschwenkbar, um die Höhe des Erntevorsatzes 20 gegenüber dem Erdboden verstellen zu können.

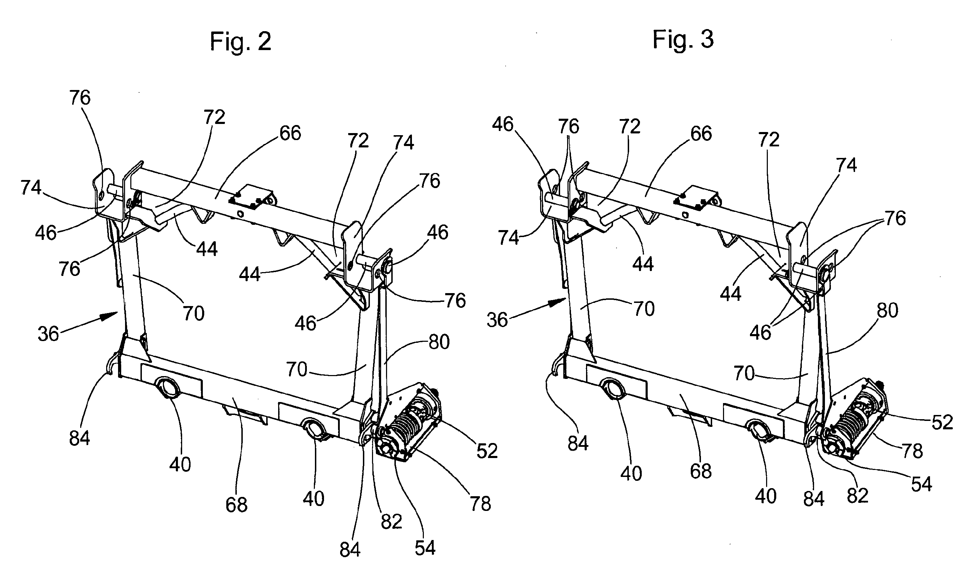

In der Figur 1 ist aus Gründen der besseren Anschaulichkeit der Erntevorsatz 20 in einer von der Erntemaschine 10 demontierten Position gezeigt. Die Befestigung der Erntevorsatzes 20 an der Erntemaschine 10 erfolgt mittels eines Zwischenrahmens 36, der an der Vorderseite des Einzugsgehäuses 34 angebracht wird und in der Figur 1 ebenfalls in einer abgenommenen Position dargestellt ist. Der Zwischenrahmen 36 stützt sich am Einzugsgehäuse 34 durch ein oberes Paar von Rollen 38 und ein unteres Paar von Rollen 40 ab. Die oberen Rollen 38 (vgl. Figuren 2 und 3) sind an beiden Seiten an der Vorderseite des Einzugsgehäuses 34 an dessen Oberseite befestigt und um horizontale, sich in Vorwärtsrichtung V erstreckende Achsen drehbar. Der Zwischenrahmen 36 umfasst nach oben gekrümmte Auflageelemente 44, die sich im montierten Zustand in Nuten der Rollen 38 befinden. Die unteren Rollen 40 sind im unteren Bereich des Zwischenrahmens 36 drehbar gelagert. Ihre Drehachsen befinden sich in einer vertikalen Ebene und verlaufen schräg nach oben und innen. Die unteren Rollen 40 liegen im montierten Zustand an mit ihnen zusammenwirkenden Flächen im unteren Bereich der Vorderseite des Einzugsgehäuses 34 an. Im Ergebnis bildet der Zwischenrahmen 38 einen Pendelrahmen, der gegenüber dem Einzugsgehäuse 34 um eine virtuelle, sich in Vorwärtsrichtung und horizontal erstreckende Achse, die sich etwa im Zentrum des Einzugsgehäuses 34 befindet, drehbar gelagert ist.

Der Zwischenrahmen 38 weist in seinem oberen Bereich an beiden Seiten je eine Befestigungseinrichtung 46 auf, die in Form von Stiften realisiert sind. Der Erntevorsatz 20 ist in seinem rückwärtigen, oberen Bereich wiederum mit Haken 48 ausgestattet, die im montierten Zustand die Befestigungseinrichtungen 46 von oben her umgreifen und den Erntevorsatz 20 am Zwischenrahmen 36 arretieren.

Der Antrieb der anzutreibenden Elemente des Erntevorsatzes 20 erfolgt durch einen erntemaschinenseitigen Antrieb 50, bei dem es sich um einen Hydromotor handeln kann, der von einer mechanisch durch einen Verbrennungsmotor der Erntemaschine 10 angetriebenen Hydropumpe mit unter Druck stehendem Hydraulikfluid beaufschlagt wird. Die Drehgeschwindigkeit des Antriebs 50 kann verstellbar sein, um die Arbeitsgeschwindigkeit des Erntevorsatzes 20 an seine Arbeitsbreite, die Vortriebsgeschwindigkeit der Erntemaschine 10 und/oder die Eigenschaften des Ernteguts anpassen zu können, wozu (auch hinsichtlich der Möglichkeit, einen Abgabeförderer des Erntevorsatzes 20 mit einer anderen Geschwindigkeit als den Aufnahmeförderer anzutreiben, wozu zwei Antriebsstränge zwischen der Erntemaschine 10 und dem Erntevorsatz 20 vorzusehen wären) auf die Offenbarung der DE 10 2004 029 953 A1verwiesen wird. Der Antrieb 50 treibt eine Erntevorsatzabtriebswelle 52 an, die sich in Vorwärtsrichtung nach vorn bis zum Zwischenrahmen 36 erstreckt. Die Erntevorsatzabtriebswelle 52 ist als teleskopierbare Gelenkwelle ausgeführt. Die Erntevorsatzabtriebswelle 52 ist an ihrem vorderen Ende mit einer erntemaschinenseitigen Kupplungshälfte 54 gekoppelt, die mit einer erntevorsatzseitigen Kupplungshälfte 56 eine trennbare Kupplung bildet. Die erntevorsatzseitige Kupplungshälfte 56 ist mit einer sich koaxial zur Erntevorsatzabtriebswelle 52 erstreckenden Erntevorsatzantriebswelle 58 verbunden. Die Erntevorsatzantriebswelle 58 steht über ein Winkelgetriebe 60 mit einer Querwelle 62 in Antriebsverbindung, welche wiederum zum Antrieb der anzutreibenden Elemente des Erntevorsatzes 20 dient, wie der Mäh- und Einzugseinrichtungen (nicht gezeigt) und der Stängelheberschnecke 64.

Die Kupplungshälften 54, 56 können als zusammenpassende Klauenkupplungen ausgeführt sein, wie anhand der erntemaschinenseitigen Kupplungshälfte 54 in der Figur 2 und 3 erkennbar ist. Wie dort gezeigt, kann eine oder beide Kupplungshälfte(n) 54, 56 durch Federkraft gegen die andere Kupplungshälfte 56, 54 vorgespannt werden. Es ist auch denkbar, die Kupplungshälften auf der Seite der Erntemaschine 10 oder des Erntevorsatzes 20 durch einen separaten Aktor aneinander zu verriegeln (vgl. DE 10 2007 043 032 A1).

Es wird nun auf die Figur 2 verwiesen, in welcher der Zwischenrahmen 36 in einer perspektivischen Darstellung gezeigt wird. Der Zwischenrahmen 36 umfasst einen oberen Querträger 66 und einen unteren Querträger 68, die an beiden seitlichen Enden untereinander durch vertikale Träger 70 verbunden sind. Am unteren Querträger 68 sind die unteren Rollen 40 drehbar gelagert. Die Auflageelemente 44 erstrecken sich jeweils diagonal zwischen einem vertikalen Träger 70 und dem oberen Querträger 66, wobei zur Versteifung noch Dreieckbleche 72 vorgesehen sind. Die vertikalen Träger 70 und der Querträger 66 sind an beiden Seiten des Querträgers 66 jeweils mit einer U-förmigen Aufnahme 74 verbunden. Die durch das U gebildeten Taschen der Aufnahmen 74 erstrecken sich horizontal und in Vorwärtsrichtung. Beide seitlichen Wände der Aufnahmen 74 sind an zwei in Vorwärtsrichtung beabstandeten Positionen mit sich horizontal und quer zur Vorwärtsrichtung erstreckenden Öffnungen (insbesondere Bohrungen) 76 versehen. In je eine der Öffnungen 76 ist die Befestigungseinrichtung 46 gesteckt. Die anhand eines Vergleiches der Figuren 2 und 3 erkennbare Möglichkeit, die Befestigungseinrichtung 46 (bei abgenommenem Erntevorsatz 20) wahlweise in eine von zwei Öffnungen 76 einzustecken, erlaubt eine Veränderung der Neigung des Erntevorsatzes 20, was es ermöglicht, ihn unabhängig von der jeweiligen Arbeitshöhe näherungsweise horizontal zu orientieren.

Die Erntevorsatzabtriebswelle 52 ist in einer Halterung 78 drehbar gelagert. Die Halterung 78 ist ihrerseits am Zwischenrahmen 36 am seitlichen Ende des unteren Querträgers 68 um eine sich horizontal und quer zur Vorwärtsrichtung erstreckende Drehachse 82 schwenkbar gelagert und mit einer Strebe 80 verbunden, die sich bis zur darüber angeordneten Aufnahme 74 erstreckt. Die Strebe 80 ist mit einer einzigen Öffnung versehen, durch die sich die Befestigungseinrichtung 46 erstreckt. Falls demnach die Befestigungseinrichtung 46 zwischen den Öffnungen 76 umgesteckt wird, um die Neigung des Erntevorsatzes 20 gegenüber dem Einzugsgehäuse 34 zu verändern, wird auch die Strebe 80 um die Drehachse 82 gedreht. Das hat zur vorteilhaften Folge, dass die Ausrichtung der erntemaschinenseitigen Kupplungshälfte 54 derart an die Orientierung des Erntevorsatzes 20 angepasst wird, dass sie beim Anbringen des Erntevorsatzes 20 automatisch mit der erntevorsatzseitigen Kupplungshälfte 56 in Eingriff gerät. Dadurch ist trotz der Drehbarkeit des Erntevorsatzes 20 um die sich in Vorwärtsrichtung V erstreckende Achse und seiner verstellbaren Neigung stets gewährleistet, dass die Kupplungshälften 54, 56 beim Anbringen des Erntevorsatzes 20 selbsttätig in Eingriff gelangen und sich beim Abnehmen des Erntevorsatzes 20 selbsttätig trennen.

Zusätzliche, an der Unterseite des Zwischenrahmens 36 angebrachte Haken 84 ermöglichen ein Verrasten der Unterseite des Erntevorsatzes 20 am Zwischenrahmen 36. Sie können zum Abnehmen des Erntevorsatzes 20 manuell oder durch Aktoren (nicht gezeigt) gelöst werden.

## Patentansprüche

1. Antriebsanordnung für einen Erntevorsatz (20) einer Erntemaschine (10), die ein Fahrgestell (12) umfasst, an dem ein Einzugsgehäuse (34) befestigt ist, an dessen Frontseite eine gegenüber dem Einzugsgehäuse (34) bewegliche Befestigungseinrichtung (46) angebracht ist, an der ein Erntevorsatz (20) abnehmbar befestigbar ist, wobei die Befestigungseinrichtung (46) an einem Zwischenrahmen (36) angebracht ist, der gegenüber dem Einzugsgehäuse (34) um eine sich in Vorwärtsrichtung erstreckende Achse beweglich ist, das Antriebssystem eine von der Erntemaschine (10) her in Drehung versetzbare, mit der Befestigungseinrichtung (46) derart gekoppelte Erntevorsatzabtriebswelle (52) umfasst, dass die Erntevorsatzabtriebswelle (52) sich mit der Befestigungseinrichtung (46) gegenüber dem Einzugsgehäuse (34) bewegen kann, und eine Erntevorsatzantriebswelle (58) des Erntevorsatzes (42) antriebsmäßig mit der Erntevorsatzabtriebswelle (52) verbindbar ist, **dadurch gekennzeichnet, dass** zwischen der Erntevorsatzabtriebswelle (52) und der Erntevorsatzantriebswelle (58) eine Kupplung mit zwei Kupplungshälften (54, 56) angebracht ist, die sich bei einer Demontage des Erntevorsatzes (20) vom Einzugsgehäuse (34) selbsttätig trennen und bei einer Anbringung des Erntevorsatzes (20) am Einzugsgehäuse (34) selbsttätig verbinden, dass die Befestigungseinrichtung (46) gegenüber dem Zwischenrahmen (36) in Vorwärtsrichtung verstellbar ist, und dass die erntemaschinenseitige Kupplungshälfte (54) mit der Befestigungseinrichtung gekoppelt ist.

2. Antriebsanordnung nach Anspruch 1, **dadurch gekennzeichnet, dass** die Befestigungseinrichtung (46) zwei beidseits und oberhalb einer Einzugsöffnung des Einzugsgehäuses (34) angeordnete, sich horizontal und quer zur Vorwärtsrichtung erstreckende Stifte umfasst, die bezüglich der Vorwärtsrichtung in unterschiedlichen Positionen am Zwischenrahmen (36) fixierbar sind, wobei der Erntevorsatz (20) mit Haken (48) ausgestattet ist, die von oben her in eine jeweils einen Stift umgreifende Position verbringbar sind.

3. Antriebsanordnung nach Anspruch 2, **dadurch gekennzeichnet, dass** einer der Stifte über eine um eine horizontal und quer zur Vorwärtsrichtung schwenkbar angelenkte Strebe (80) mit der erntemaschinenseitigen Kupplungshälfte (54) derart verbunden ist, dass die erntemaschinenseitige Kupplungshälfte (54) mit dem Stift verstellt wird, wenn er in eine andere Position verbracht wird.

4. Antriebsanordnung nach Anspruch 3, **dadurch gekennzeichnet, dass** die Schwenkachse (82) der Strebe (80) und die erntemaschinenseitige Kupplungshälfte (54) seitlich neben dem unteren Ende des Einzugsgehäuses (34) angeordnet sind.

5. Antriebsanordnung nach einem der Ansprüche 2 bis 4, **dadurch gekennzeichnet, dass** die Stifte wahlweise in einer von mehreren Öffnungen (76) in U-förmigen, mit dem Zwischenrahmen (36) verbundenen Aufnahmen (74) und eine Öffnung der Strebe (80) einsteckbar sind.

6. Antriebsanordnung nach einem der Ansprüche 1 bis 5, **dadurch gekennzeichnet, dass** der Zwischenrahmen (36) durch eine Rollenlagerung gegenüber dem Einzugsgehäuse (34) um eine virtuelle, sich in Vorwärtsrichtung erstreckende Achse drehbar gelagert ist.

7. Antriebsanordnung nach einem der vorhergehenden Ansprüche, **dadurch gekennzeichnet, dass** die Erntevorsatzabtriebswelle (52) eine sich in Vorwärtsrichtung erstreckende Gelenkwelle ist, die mit einem erntemaschinenseitigen Antrieb verbunden ist, und/oder dass die Erntevorsatzantriebswelle (58) über ein Winkelgetriebe (60) mit einer Querwelle (62) zum Antrieb von antreibbaren Elementen des Erntevorsatzes (20) antriebsverbunden ist.

8. Antriebsanordnung nach einem der vorhergehenden Ansprüche, **dadurch gekennzeichnet, dass** die Erntevorsatzabtriebswelle (52) und die Erntevorsatzantriebswelle (58) sich in Vorwärtsrichtung erstrecken.

9. Erntemaschine (10) mit einer Antriebsanordnung nach einem der vorhergehenden Ansprüche.

## Claims

1. Drive assembly for a harvesting attachment (20) of a harvesting machine (10) which comprises a chassis (12) to which a gathering housing (34) is fastened, with a fastening device (46) which is movable in relation to the gathering housing (34) and to which a harvesting attachment (20) can be removably fastened being mounted on the front side of said gathering housing, wherein the fastening device (46) is mounted on an intermediate frame (36) which is movable in relation to the gathering housing (34) about an axis extending in the forwards direction, the drive system comprises a harvesting attachment output shaft (52) which can be set into rotation by the harvesting machine (10) and is coupled to the fastening device (46) in such a manner that the harvesting attachment output shaft (52) can be moved in relation to the gathering housing (34) by the fastening device (46), and a harvesting attachment drive shaft (58) of the harvesting attachment (20) can be connected in terms of drive to the harvesting attachment output shaft (52), **characterized in that** a coupling having two coupling halves (54, 56) is mounted between the harvesting attachment output shaft (52) and the harvesting attachment drive shaft (58), said coupling automatically separating when the harvesting attachment (20) is removed from the gathering housing (34) and automatically connecting when the harvesting attachment (20) is mounted on the gathering housing (34), **in that** the fastening device (46) can be adjusted in the forwards direction in relation to the intermediate frame (36), and **in that** the coupling half (54) on the harvesting-machine side is coupled to the fastening device.

2. Drive assembly according to Claim 1, **characterized in that** the fastening device (46) comprises two pins which are arranged on both sides and above a gathering opening of the gathering housing (34), extend horizontally and transversely with respect to the forwards direction and are fixable on the intermediate frame (36) in different positions with regard to the forwards direction, wherein the harvesting attachment (20) is equipped with hooks (48) which can be placed from above into a position engaging in each case around a pin.

3. Drive assembly according to Claim 2, **characterized in that** one of the pins is connected to the coupling half (54) on the harvesting-machine side via a strut (80), which is coupled pivotably horizontally and transversely with respect to the forwards direction, in such a manner that the coupling half (54) on the harvesting-machine side is adjusted with the pin when said pin is brought into a different position.

4. Drive assembly according to Claim 3, **characterized in that** the pivot axis (82) of the strut (80) and the coupling half (54) on the harvesting-machine side are arranged laterally next to the lower end of the gathering housing (34).

5. Drive assembly according to one of Claims 2 to 4, **characterized in that** the pins can optionally be inserted into one of a plurality of openings (76) in U-shaped receptacles (74) connected to the intermediate frame (36) and into an opening in the strut (80).

6. Drive assembly according to one of Claims 1 to 5, **characterized in that** the intermediate frame (36) is mounted rotatably in relation to the gathering housing (34) about a virtual axis extending in the forwards direction by means of a roller mounting.

7. Drive assembly according to one of the preceding claims, **characterized in that** the harvesting attachment output shaft (52) is a propeller shaft which extends in the forwards direction and is connected to a drive on the harvesting-machine side, and/or **in that** the harvesting attachment drive shaft (58) is connected in terms of drive via an angular gear (60) to a transverse shaft (62) for driving drivable elements of the harvesting attachment (20).

8. Drive assembly according to one of the preceding claims, **characterized in that** the harvesting attachment output shaft (52) and the harvesting attachment drive shaft (58) extend in the forwards direction.

9. Harvesting machine (10) with a drive assembly according to one of the preceding claims.

## Revendications

1. Agencement d'entraînement pour un accessoire de récolte (20) d'une moissonneuse (10), qui comprend un châssis (12) sur lequel est fixé un carter d'amenée (34) sur le côté avant duquel est monté un dispositif de fixation (46) déplaçable par rapport au carter d'amenée (34), sur lequel peut être fixé de manière amovible un accessoire de récolte (20), le dispositif de fixation (46) étant monté sur un cadre intermédiaire (36) qui est déplaçable par rapport au carter d'amenée (34) autour d'un axe s'étendant dans la direction vers l'avant, le système d'entraînement comprenant un arbre de prise de force d'accessoire de récolte (52) pouvant être mis en rotation à partir de la moissonneuse (10), accouplé au dispositif de fixation (46) de telle sorte que l'arbre de prise de force d'accessoire de récolte (52) puisse se déplacer par rapport au carter d'amenée (34) avec le dispositif de fixation (46), et un arbre d'entraînement d'accessoire de récolte (58) de l'accessoire de récolte (20) pouvant être connecté par entraînement à l'arbre de prise de force d'accessoire de récolte (52), **caractérisé en ce qu'**entre l'arbre de prise de force d'accessoire de récolte (52) et l'arbre d'entraînement d'accessoire de récolte (58) est monté un embrayage avec deux moitiés d'embrayage (54, 56) qui se séparent automatiquement lors d'un démontage de l'accessoire de récolte (20) du carter d'amenée (34) et qui se connectent automatiquement lors d'un montage de l'accessoire de récolte (20) sur le carter d'amenée (34), **en ce que** le dispositif de fixation (46) peut être réglé dans la direction vers l'avant par rapport au cadre intermédiaire (36) et **en ce que** la moitié d'embrayage du côté de la moissonneuse (54) est accouplée au dispositif de fixation.

2. Agencement d'entraînement selon la revendication 1, **caractérisé en ce que** le dispositif de fixation (46) comprend deux goupilles disposées de chaque côté et au-dessus d'une ouverture d'amenée du carter d'amenée (34), s'étendant horizontalement et transversalement à la direction vers l'avant, lesquelles peuvent être fixées par rapport à la direction vers l'avant dans différentes positions sur le cadre intermédiaire (36), l'accessoire de récolte (20) étant configuré avec des crochets (48) qui peuvent être amenés depuis le haut dans une position venant en prise respectivement autour d'une goupille.

3. Agencement d'entraînement selon la revendication 2, **caractérisé en ce que** l'une des goupilles est connectée par le biais d'une entretoise (80) articulée de manière pivotante horizontalement et transversalement à la direction vers l'avant à la moitié d'embrayage (54) du côté de la moissonneuse, de telle sorte que la moitié d'embrayage (54) du côté de la moissonneuse soit déplacée avec la goupille lorsqu'elle est amenée dans une autre position.

4. Agencement d'entraînement selon la revendication 3, **caractérisé en ce que** l'axe de pivotement (82) de l'entretoise (80) et la moitié d'embrayage (54) du côté de la moissonneuse sont disposés latéralement à côté de l'extrémité inférieure du carter d'amenée (34).

5. Agencement d'entraînement selon l'une quelconque des revendications 2 à 4, **caractérisé en ce que** les goupilles peuvent être enfichées au choix dans l'une de plusieurs ouvertures (76) dans des logements (74) en forme de U, connectés au cadre intermédiaire (36), et dans une ouverture de l'entretoise (80).

6. Agencement d'entraînement selon l'une quelconque des revendications 1 à 5, **caractérisé en ce que** le cadre intermédiaire (36) est monté de manière à pouvoir tourner par le biais d'un support sur palier à rouleaux par rapport au carter d'amenée (34), autour d'un axe virtuel s'étendant dans la direction vers l'avant.

7. Agencement d'entraînement selon l'une quelconque des revendications précédentes, **caractérisé en ce que** l'arbre de prise de force d'accessoire de récolte (52) est un arbre articulé s'étendant dans la direction vers l'avant, qui est connecté à un entraînement du côté de la moissonneuse, et/ou **en ce que** l'arbre d'entraînement d'accessoire de récolte (58) est connecté par entraînement par le biais d'un renvoi d'angle (60) à un arbre transversal (62) en vue de l'entraînement d'éléments entraînables de l'accessoire de récolte (20).

8. Agencement d'entraînement selon l'une quelconque des revendications précédentes, **caractérisé en ce que** l'arbre de prise de force d'accessoire de récolte (52) et l'arbre d'entraînement d'accessoire de récolte (58) s'étendent dans la direction vers l'avant.

9. Moissonneuse (10) comprenant un agencement d'entraînement selon l'une quelconque des revendications précédentes.
